# FASCICULE DE BREVET EUROPEEN

(11) **EP 1 941 656 B1**
(45) Date de publication et mention de la délivrance du brevet: **04.08.2010**
(21) Numéro de dépôt: 06820163.1
(22) Date de dépôt: 05.10.2006
(51) Int. Cl.: H04L 12/00, H04L 12/26, G01R 31/00

(54) **DISPOSITIF DE LECTURE D'INFORMATIONS SUR BUS NUMERIQUE SANS CONNEXION FILAIRE AU RESEAU**
EINRICHTUNG ZUM LESEN VON INFORMATIONEN AUF EINEM DIGITALEN BUS OHNE DRAHTVERBINDUNG MIT DEM NETZWERK
DEVICE FOR READING INFORMATION ON A DIGITAL BUS WITHOUT A WIRE CONNECTION TO THE NETWORK

(30) Priorité: 06.10.2005 FR 0510343; 12.01.2006 FR 0600321
(43) Date de publication de la demande: 09.07.2008
(73) Titulaire: Masternaut, 27400 Louvier (FR)
(72) Inventeur: BERENGER, Jean Yves, F-73100 Brison Saint Innocent (FR); MEDAN, Eric, F-74000 Annecy (FR)
(74) Mandataire: Gasquet, Denis
(86) Numéro de dépôt international: PCT/FR2006/002255
(87) Numéro de publication internationale: WO 2007/042651

(56) Documents cités:
- DE-A- 10 343 844
- US-A- 5 001 431
- US-A- 5 001 431
- US-A- 5 208 541
- US-A- 5 208 541
- US-A- 5 617 282
- US-A- 5 617 282
- US-A1- 2003 074 511
- US-A1- 2003 074 511
- US-A1- 2004 043 739
- US-A1- 2004 043 739
- US-A1- 2004 236 885

## Description

La présente invention concerne un dispositif de lecture d'informations transitant sur un bus de données, et plus particulièrement un dispositif sans connexion filaire au réseau. L'invention est destinée plus particulièrement au domaine des réseaux embarqués ('automobile, transport, automation, aéro...). L'invention peut également s'appliquer à d'autres domaines comme l'informatique. Le dispositif de lecture de l'invention permet la récupération des données du réseau en préservant l'intégrité du câblage.

L'objet de l'invention consiste à récupérer les données échangées sur un bus de communication numérique. Un bus de communication est constitué de 1 ou plusieurs lignes, chaque ligne pouvant être représentée par un conducteur métallique et son isolant.

Le dispositif de lecture, disposé sur une ou plusieurs des lignes, s'affranchit d'un contact physique avec la partie conductrice de la ligne. L'invention se rapporte plus particulièrement aux réseaux multiplexés sur paire filaire de type cuivre qui équipent aujourd'hui tous les nouveaux véhicules, et vise en particulier le réseau connu sous l'appellation bus "CAN " (Controler Area Network). Le CAN, décliné en différentes normes (ISO 11898-2, ISO11898-3, SAE J2411) suivant la vitesse ou le nombre de lignes de communications utilisées est le protocole de communication de loin le plus utilisé aujourd'hui chez les constructeurs mondiaux. Mais l'invention pourrait se généraliser à d'autres réseaux embarqués (VAN, LIN, Flexray, AFDX...), et à tous les systèmes de communication par réseau numérique avec support physique cuivre permettant un couplage de type capacitif.

L'invention propose un moyen de récupérer les données circulant sur un bus de données numérique (en l'occurrence le réseau CAN) d'un véhicule sans toucher à l'intégrité physique du réseau.

Aujourd'hui, sur la plupart des véhicules équipés de réseau CAN, les constructeurs déclinent toute responsabilité si des équipements de « 2eme monte » comportant une liaison connectable sur leur bus CAN soit montée sur le véhicule. Il est donc fortement déconseillé de pratiquer à des épissures sur les faisceaux du véhicule.

Des équipements connectables sur la prise Diagnostic sont éventuellement tolérés par certains constructeurs. Mais ce type de connexion ne résout pas l'ensemble des problèmes. Certains réseaux CAN ne sont pas accessibles sur cette prise et l'encombrement d'un tel branchement n'est pas souhaitable dans certains véhicules. Les constructeurs refusent que d'autres équipements soient connectés sur leur bus CAN, s'ils modifient la topologie et les caractéristiques électriques du réseau (problème de réveil ou de non-réveil de l'ensemble ou parties de l'électronique du véhicule modifié par exemple).

Aujourd'hui, il n'y pas de solution performante permettant de récupérer les données CAN sur le véhicule sans toucher à l'intégrité du réseau tout en garantissant une connexion simple à effectuer et stable dans le temps et avec un taux de couverture correct (nombre de messages reçus au travers du dispositif / nombre de messages échangés sur le médium)

Une solution existe aujourd'hui en Allemagne proposé par la Société Eiger Messtechnik sous l'appellation CANCLip, pour se connecter sur le véhicule en préservant l'intégrité du réseau. Elle utilise le principe du couplage inductif mais présente de ce fait certains problèmes :
- Encombrement de la pince qui est une bobine pouvant être volumineuse pour ce type d'applications
- La version actuelle de la pince pose des problèmes dans le temps car elle n'est pas suffisamment fixée au câble.
- Le principe du couplage inductif est dépendant des variations de courant sur la ligne espionnée. Si bien que, suivant la position de la pince sur le réseau, un certain nombre d'informations peuvent être mal-interprêtées
- La version actuelle de la pince n'est pas compatible avec l'ensemble des vitesses et des technologies CAN aujourd'hui disponibles. Pour couvrir la gamme des configurations, il faut plusieurs pinces de même principe mais au réglages différents.
- Couverture faible ou médiocre (nombre de messages reçus au travers du dispositif / nombre de messages échangés sur le médium).

Le dispositif divulgué par la demande de brevet US 2004/0236885, est un dispositif dont les connections destinées à capter les informations ne sont pas des connexions sans contact, mais des réelles connexions, faites en des points bien précis.

La présente invention se veut de résoudre les problèmes des systèmes connus, en proposant un dispositif de lecture d'informations, comprenant au moins une pince de connexion, à couplage capacitif, qui permettent de se connecter sur le réseau sans contact, tandis qu'un circuit électronique, analyse et traite les signaux reçus après les avoir amplifiés et permet de régénérer les données du bus de communication dans le format souhaité.

Le fait d'utiliser une pince de type capacitif permet
- de réduire l'encombrement de la pince et de faciliter sa mise en place sur le réseau.
- de couvrir l'ensemble des vitesses et des technologies CAN utilisées aujourd'hui avec la même pince et la même électronique.
- de supprimer les problèmes potentiels liés aux variations du sens de courant dans un message en fonction de l'émetteur car la pince utilise le principe du couplage capacitif travaillant sur des variations de tensions.

On ajoutera que la pince du dispositif de l'invention se prend sur les deux fils du réseau CAN et réalise ainsi une mesure différentielle, ce qui améliore l'immunité au bruit par rapport à une pince, qui bien que fonctionnelle également serait connectée sur une seule ligne du bus de communication.

Ainsi le dispositif de lecture d'informations de l'invention, est destiné à récupérer les signaux échangés sur un bus de communication numérique et à traiter ces signaux, et est **caractérisé en ce qu**'il comprend des moyens de connexion aux réseaux multiplexés sans connexion filaire destinés à récupérer les signaux émis sur le bus de données numériques.

Selon une caractéristique complémentaire, les moyens de connexion sont constitués par au moins une pince de connexion sans contact électrique, qui est une pince de type capacitive.

Selon une autre caractéristique la ou (les) pince(s) est (sont) constituée(s) par une première enveloppe périphérique métallique autour de laquelle est disposée une couche isolante tel que par exemple réalisée en élastomère ou autre, autour de laquelle est disposé un serre fil assurant le couplage physique grâce à des moyens de serrage tels qu'une vis ou tout autre moyen.

Ajoutons que la ou (les) pince(s) est (sont) reliée(s) à un circuit électronique, qui analyse et traite les signaux reçus, et que la pince se prend sur au moins une ligne du bus de communication, voir les deux lignes du bus de communication pour réaliser une mesure différentielle.

Selon le mode de réalisation donné à titre d'exemple, le circuit électronique de traitement comprend au moins
- un amplificateur destiné à amplifier les signaux montants et descendant,
- un détecteur et un comparateur,
- un circuit de remise en forme des signaux traités,
- une interface de ligne,

Notons aussi que le dispositif de l'invention est tout à fait adapté pour la lecture des informations CAN.

Ainsi, le dispositif de l'invention permet sans qu'il y ait contact,
- de se connecter sur le réseau CAN d'un véhicule pour espionner les données circulant sur celui-ci sans toucher à l'intégrité physique du réseau CAN, (pas de coupure de fils et de modifications des caractéristiques électriques ou protocole)
   et de
- faciliter la connexion dans le véhicule, à un endroit dans le véhicule où le réseau est disponible et accessible tout en n'étant pas gênant pour l'utilisation du véhicule.
- ainsi que de ne pas perturber le bus numérique en cas de défaillance

D'autres caractéristiques et avantages de l'invention se dégageront de la description qui va suivre en regard des dessins annexés qui ne sont donnés qu'à titre d'exemples non limitatifs.
La figure 1 est une vue schématique d'ensemble du dispositif.
La figure 2 est une vue représentant de façon synoptique la pince de connexion du dispositif.
La figure 3 est une vue schématique en coupe transversale de la pince de connexion, montée sur la ligne d'un bus correspondant.
La figure 4 est une vue illustrant de façon synoptique le circuit de traitement du signal.

Le dispositif portant la référence générale (1) est constitué d'un boîtier de traitement (2) relié à une alimentation tel que la batterie ( 3) par exemple celle du véhicule équipé du dispositif, tandis que ledit boîtier est connecté sur le réseau électrique CAN (4) du véhicule.

Selon le mode préféré de l'invention, le dispositif comprend deux pinces de connexion (5a, 5b), à savoir et par exemple, une première connexion ( 5a) mise en place sur la ligne CAN H (4a) de signal montant, et une deuxième connexion (5b) mise en place sur la ligne CAN L (4b) de signal descendant.

Les connexions (5a, 5b) sont constituées par des pinces sans contact donc sans connexion filaire, destinés à récupérer les signaux émis sur le bus de données numériques.

Les pinces sont des pinces assurant un couplage de type capacitif. ce qui permet :
- de réduire l'encombrement de la pince et faciliter ainsi sa mise en oeuvre dans un véhicule
- de couvrir l'ensemble des vitesses et des technologies CAN aujourd'hui utilisées avec la même pince et électronique.
- de supprimer les problèmes potentiels liés aux variations de courant car la pince utilise le principe du couplage capacitif travaillant sur des variations de tensions et il n'y a pas de problèmes similaires connus à ce jour.

Les deux pinces (5a, 5b) sont mises en place sur les deux fils du réseau CAN (4a, 4b), la ligne CAN H (4a) de signal montant et la ligne CAN L (4b) de signal descendant et réalise une mesure différentielle, ce qui améliore l'immunité au bruit par rapport à la version avec une seule pince connectée sur une seule ligne.

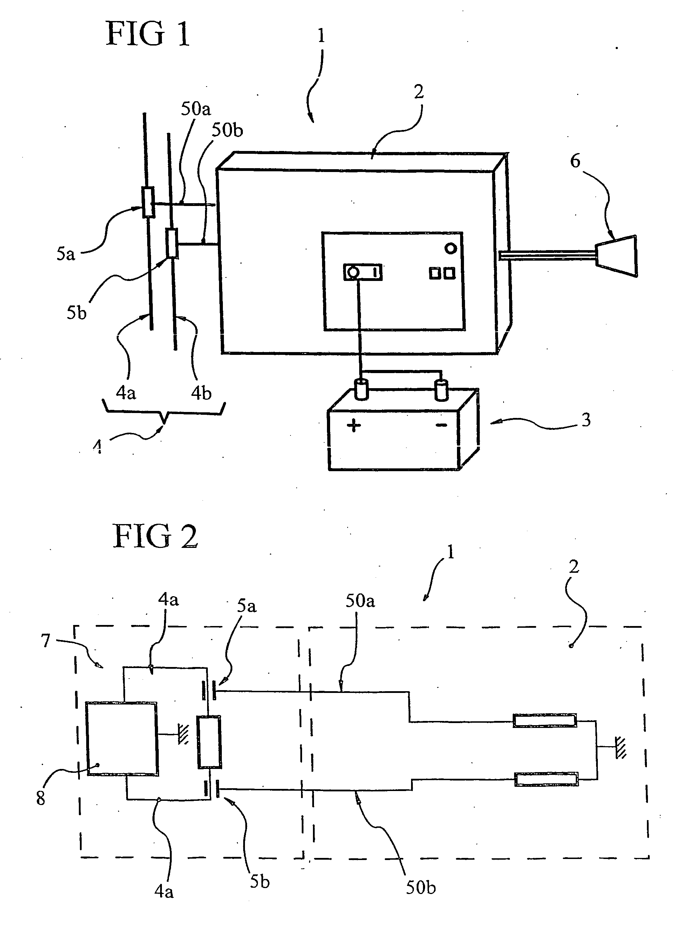

La figure 2 est une vue représentant de façon schématique la pince de connexion (5a, 5b) du dispositif de l'invention (1). Grâce à cette figure, on notera que la pince de connexion est divisée en deux parties, à savoir une partie par ligne CAN, le réseau CAN comprenant deux lignes, à savoir une première ligne (4a) correspondant au niveau CAN H de signal montant, et un deuxième ligne (4b) correspondant au niveau CAN L de signal descendant, le réseau en place (7) comprenant bien évidemment au moins une source de signal (8), tel que par exemple le système ABS, les airbags, les feux de recul et autres.... Les pinces (5a, 5b) sont connectées grâce à des fils de liaison (50a, 50b) à une électronique (2), qui permet de remette en forme les informations captées par les pinces.

Bien entendu on pourrait concevoir une seule pince (5) qui se connecterait sur les deux lignes de communication (4a, 4b), n'utiliser qu'une seule ligne pour des applications nécessitant moins de précisions ou étant sur des bus de communication une ligne....

Ajoutons que le boîtier (2) comprend par ailleurs des moyens de connexion (6) permettant sa connexion à un ordinateur.

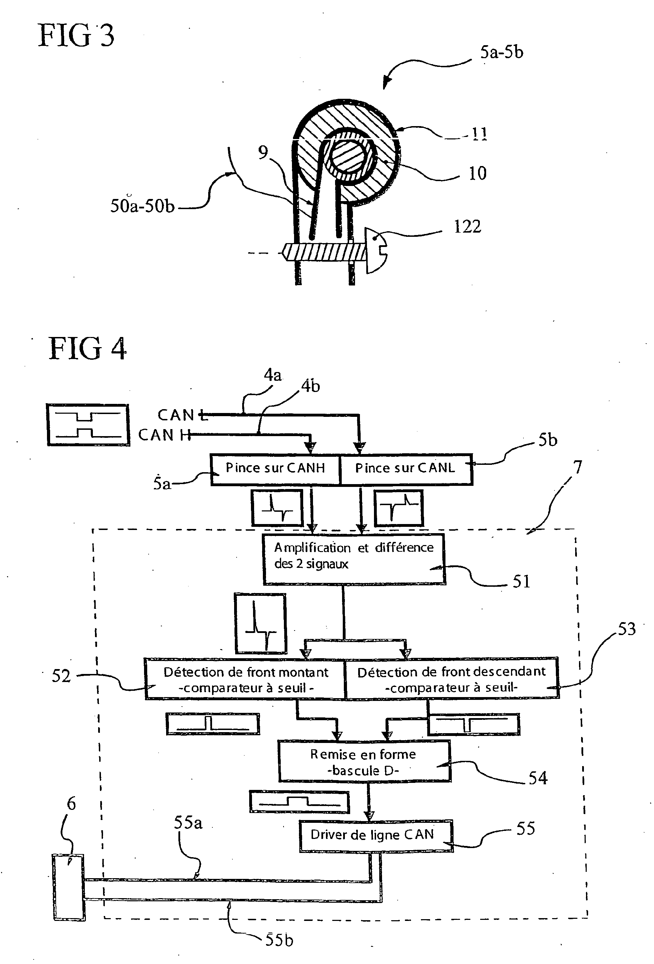

La figure 3 est une vue schématique en coupe transversale de la pince de connexion, montée sur la ligne du bus correspondant. La pince est illustrée de façon schématique dans une position inactive avant son verrouillage sur la ligne. La ligne du bus CAN est au centre et la pince qui l'entoure est constituée par une première enveloppe périphérique métallique (9) autour de laquelle est disposée une couche isolante (10) souple telle que par exemple réalisée en élastomère ou autre, autour de laquelle est disposé un serre fil (11) assurant le couplage physique grâce à des moyens de serrage (12) tels qu'une vis ou tout autre moyen. Bien entendu la pince de connexion basée sur le même principe pourrait être d'un tout autre genre et avoir la forme d'une vraie pince avec des mâchoires sollicitées à la fermeture par un système élastique.

La figure 4 est une vue illustrant de façon synoptique le circuit de traitement du signal.

Ainsi les signaux montants et les signaux descendant issus des pinces (5a, 5b) sont envoyés dans un module électronique (2) pour y être amplifiés et comparés dans une mode d'amplification (51). En effet les signaux aussi bien montants que descendants étant de trop faible amplitude ne pourraient pas être gérés correctement, et c'est pourquoi il est rendu nécessaire de les amplifier. Puis on procède à la détection du front montant et de front descendant et à leur comparaison à un seuil, puis les signaux ainsi générés sont transmis dans un circuit de mise en forme (54) pour être transmis dans un driver de ligne CAN (55), dont les sorties (55a, 55b) sont connectée à une prise par exemple une de type série (6) permettant la connexion du module (2) à un ordinateur.

Selon le mode de réalisation illustré à titre d'exemple, l'amplification est faite dans le circuit de traitement, mais il pourrait en être autrement comme par exemple au niveau de la pince, ou à d'autres endroits appropriés.

On a compris de ce qui précède que le dispositif de l'invention permet d'espionner un réseau CAN sans modifier la topologie et les caractéristiques électriques du réseau. Ainsi, l'accès aux informations CAN du véhicule peut être ouvert à des sociétés externes (ce qui est en rapport avec la réglementation)

On notera aussi que la connexion du dispositif est particulièrement simple, car sa pince de connexion peut se connecter facilement dans un véhicule vu grâce à son faible encombrement et qu'il n'y aucun lien direct avec le réseau. Par ailleurs ladite pince de connexion peut être placée à n'importe quel endroit sur la topologie du réseau. De plus ladite pince est universelle et peut donc être utilisée pour tous les types de réseau CAN d'aujourd'hui dans un véhicule (aujourd'hui 2 types de couches physiques CAN HS ou CAN LS avec des débits différents de 75 Kbits/s à 1Mbits/s).

Il va de soit que le dispositif de l'invention pourrait tout aussi bien être utilisé pour la lecture d'informations logiques, pour surveiller par exemple les commutations sur un organe d'un véhicule.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de lecture d'informations, destiné à récupérer les signaux échangés sur un bus de communication numérique (4) comprenant deux fils (4a, 4b), et à traiter ces signaux, ledit dispositif comprenant des moyens de connexion audit bus de communication numérique, destinés à récupérer lesdits signaux échangés sur le bus, ledit dispositif étant **caractérisé en ce que** les moyens de connexion sont constitués par une pince de connexion de type capacitive et **en ce que** ladite pince de connexion comprend au moins une pince (5a, 5b) adaptée pour être mis en place sur un des fils (4a, 4b).

2. Dispositif de lecture d'informations selon la revendication 1, **caractérisé en ce que** la pince de connexion comprend deux pinces (5a, 5b) adaptée pour être mises en place sur les deux fils (4a, 4b), à savoir sur la ligne du signal montant (4a) et sur la ligne du signal descendant (4b) afin de réaliser la mesure différentielle entre les signaux des deux fils (4a, 4b).

3. Dispositif de lecture d'informations selon la revendication 1 ou 2, **caractérisé en ce que** la ou (les) pince(s) (5a, 5b) est (sont) constituée(s) par une première enveloppe périphérique métallique (9) autour de laquelle est disposée une couche isolante (10) tel que par exemple réalisée en élastomère ou autre, autour de laquelle est disposé un serre fil (11) assurant le couplage physique grâce à des moyens de serrage (12) tels qu'une vis ou tout autre moyen.

4. Dispositif selon l'une quelconque des revendications précédentes, **caractérisé en ce que** la ou les pinces (5a, 5b) sont reliées à un circuit électronique (2), qui analyse et traite les signaux reçus.

5. Dispositif selon la revendication précédente, **caractérisée en ce que** le circuit électronique de traitement (2) comprend au moins
un amplificateur (51) destiné à amplifier les signaux montants et descendant,
un détecteur (52, 53) et un comparateur,
un circuit de remise en forme des signaux traités (54) une interface de ligne (55)

6. Dispositif selon l'une quelconque des revendications précédentes, **caractérisé en ce qu'**il est mise en place pour lire les informations d'un réseau CAN.

## Claims

1. Device for reading information, said device being intended to recover the signals which are exchanged on a digital communication bus (4) comprising two wires (4a, 4b), and to process these signals, said device including means of connection to said digital communication bus, said means being intended to recover said signals which are exchanged on the bus, said device being **characterized in that** the connection means consist of a connecting clamp of capacitive type, and **in that** said connecting clamp includes at least one clamp (5a, 5b) which is suitable to be put in place on one of the wires (4a, 4b).

2. Device for reading information according to Claim 1, **characterized in that** the connecting clamp includes two clamps (5a, 5b) which are suitable to be put in place on the two wires (4a, 4b), that is on the liner of the up-going signal (4a) and on the line of the down-going signal (4b), to implement differential measurement between the signals of the two wires (4a, 4b).

3. Device for reading information according to Claim 1 or 2, **characterized in that** the clamp(s) (5a, 5b) consist(s) of a first metallic peripheral envelope (9), around which is arranged an insulating layer (10), e.g. implemented in elastomer or otherwise, around which is arranged a wire connector (11), which ensures the physical connection thanks to tightening means (12) such as a screw or any other means.

4. Device according to any one of the preceding claims, **characterized in that** the clamp(s) (5a, 5b) is/are connected to an electronic circuit (2), which analyses and processes the received signals.

5. Device according to the preceding claim, **characterized in that** the electronic processing circuit (2) comprises at least
an amplifier (51), which is intended to amplify the up-going and down-going signals,
a detector (52, 53) and a comparator,
a circuit to reshape the processed signals (54),
a line interface (55).

6. Device according to any one of the preceding claims, **characterized in that** it is fitted to read the information of a CAN network.

## Patentansprüche

1. Einrichtung zum Lesen von Informationen, die dazu bestimmt ist, die auf einem digitalen Kommunikationsbus (4) mit zwei Drähten (4a, 4b) ausgetauschten Signale zu sammeln, und diese Signale zu verarbeiten, wobei die Einrichtung Verbindungsmittel zu dem genannten digitalen Kommunikationsbus umfasst, die dazu bestimmt sind, die genannten, auf dem Bus ausgetauschten Signale zu sammeln, wobei die Einrichtung **dadurch gekennzeichnet ist, dass** die Verbindungsmittel aus einer Verbindungsklemme kapazitiver Art bestehen und dass die genannte Verbindungsklemme mindestens eine Klemme (5a, 5b) umfasst, die zur Anbringung auf einem der Drähte (4a, 4b) angepasst ist.

2. Einrichtung zum Lesen von Informationen nach Anspruch 1, **dadurch gekennzeichnet, dass** die Verbindungsklemme zwei Klemmen (5a, 5b) umfasst, die zur Anbringung auf den beiden Drähten (4a, 4b) angepasst sind, nämlich auf die Leitung des Aufwärtssignals (4a) und auf die Leitung des Abwärtssignals (4b), um die Differenzmessung zwischen den Signalen der beiden Drähte (4a, 4b) auszuführen.

3. Einrichtung zum Lesen von Informationen nach Anspruch 1 oder 2, **dadurch gekennzeichnet, dass** die Zange oder die Zangen (5a, 5b) aus einer ersten metallischen Umhüllung (9) besteht bzw. bestehen, um welche herum eine Isolierschicht (10) angeordnet ist, die zum Beispiel aus Elastomer oder Ähnlichem ausgeführt ist, um welche herum eine Verbindungsklemme (11) angeordnet ist, welche die physikalische Kopplung mittels Klemmmittel (12) wie einer Schraube oder anderer Mittel gewährleistet.

4. Einrichtung nach einer der vorstehenden Ansprüche, **dadurch gekennzeichnet, dass** die Zange oder die Zangen (5a, 5b) an eine elektronische Schaltung (2) angeschlossen ist bzw. sind, welche die empfangenen Signale analysiert und verarbeitet.

5. Einrichtung nach dem vorstehenden Anspruch, **dadurch gekennzeichnet, dass** die elektronische Verarbeitungsschaltung (2) mindestens Folgendes umfasst:
einen Verstärker (51) für die Verstärkung der Aufwärts- und der Abwärtssignale,
einen Sensor (52, 53) und einen Komparator,
eine Schaltung für die Regeneration der verarbeiteten Signale (54),
eine Leitungsschnittstelle (55).

6. Einrichtung nach einem der vorstehenden Ansprüche, **dadurch gekennzeichnet, dass** sie aufgestellt ist, um die Informationen eines CAN-Netzwerkes zu lesen.
